# EUROPEAN PATENT SPECIFICATION

(11) **EP 2 094 530 B1**
(45) Date of publication and mention of the grant of the patent: **01.08.2012**
(21) Application number: 07857721.0
(22) Date of filing: 17.12.2007
(51) Int. Cl.: B60Q 3/06, B60P 3/14, A47B 97/00

(54) **A SERVICE VEHICLE ILLUMINATION SYSTEM, USE OF SUCH A SYSTEM AND A MODULE SYSTEM**
KUNDENDIENSTFAHRZEUGBELEUCHTUNGSSYSTEM, VERWENDUNG SOLCH EINES SYSTEMS UND MODULSYSTEM
SYSTÈME D'ÉCLAIRAGE DE VÉHICULE DE SERVICE, UTILISATION D'UN TEL SYSTÈME ET SYSTÈME MODULAIRE

(30) Priority: 22.12.2006 SE 0602782
(43) Date of publication of application: 02.09.2009
(73) Proprietor: Modul-System HH AB, 431 22 Mölndal (SE)
(72) Inventor: CARLSSON, Anders, 422 50 Hisings Backa (SE); ANDERSSON, Katarina, 417 59 Göteborg (SE); CARLSSON, Heléne, 416 70 Göteborg (SE)
(74) Representative: Somlo, Tommy
(86) International application number: PCT/EP2007/064091
(87) International publication number: WO 2008/077843

(56) References cited:
- EP-A- 0 989 026
- WO-A1-2006/020945
- ES-A1- 2 208 040
- JP-A- 5 045 048
- JP-A- 5 307 910
- US-A- 2 843 729
- US-A- 5 483 427
- US-A1- 2003 179 585
- US-A1- 2006 181 885
- US-B1- 6 220 463
- US-B1- 6 283 612

## Description

### Field of the Invention

The present invention relates to a service vehicle illumination system of a cargo or a back space of a service vehicle. Furthermore, it is disclosed a module system for a cargo or a backspace in a service vehicle, comprising said service vehicle illumination system arranged on at least one module unit containing for example work equipment.

Furthermore, use of said service vehicle illumination system in module system of a cargo or a backspace of a service vehicle is disclosed.

### Technical Background

It is common practise in the art of service vehicles to equip a cargo space or a back space of an automotive vehicle with for example cupboards, tool holders, shelves or other module units, for the purpose of enabling storing of work equipment and also perform some work.

The cargo- or the back space is often illuminated by a ceiling lamp. However, when a person is in the cargo or the back space working or looking for e.g. work equipment or tools, the light of the ceiling lamp is often shadowed by the persons body. Furthermore, shadows may be created and fall within for example the module units, which also makes it hard to find the right equipment, tool or the like or fore that matter to undertake work within the service vehicle. Furthermore, it is rare that there is an excess of windows in such service vehicles. All the above mentioned adding to possible issues of different working conditions.

To solve this problem an extra light source is often needed and conventionally placed within the cargo or the back space. However, it is often difficult to install light in an advantageous position. The extra light is for example often placed near a door to make it easy to control the light, since they often embrace a small manual switch. Obviously, once a person entered the cargo space the light coming from the light source is shadowed.

There exist conventional light systems where the switch is to some extent separated from the light source. However, these systems are time consuming and costly to install and hence often not implemented.

A further step is taken in US2005/0270770 which discloses a convenience light for illuminating small interior spaces of enclosures, such as furniture, chests, jewellery boxes and the like. It has a battery powered LED lamp, a mechanical or magnetic switch device, which is used to automatically turn on and off the LED by opening and closing a movable member (drawer, door, etc.) of the enclosure. The low power consumption LED provides lengthy continuous use of the light with a watch battery. Unsatisfactory and incorrect light may cause an increased risk of accident, and also cause eye problems.

US 6,220,463 discloses a shelving system for allowing viewing of the contents of both the upper shelves and the lower shelves within a truck

US 2,843,729 relates to a baggage rack for railroad car or similar vehicle, particularly such a rack wherein lighting fixtures for the vehicle are incorporated as part of the rack structure.

Module systems in service vehicle often needs to be adapted for different situations. It is realized that the need for improving light conditions in the cargo or backspace of a service vehicle remains. It is a further issue to provide an illumination system, which is easy to install in such an environment. It is a further object to provide an illumination system, which may be installed efficiently in existing module system of service vehicles.

### Summary of the Invention

In view of the above, an objective of the invention is to solve or at least reduce the problems discussed above. Hence, the invention according to claim 1 discloses a service vehicle illumination system of a cargo or a back space of a service vehicle, wherein a service vehicle illumination system comprising at least two light sources, being joinable via electric current supplying means and each light source having further current supplying means for enabling connection to an illumination system circuit. An arrangement like this makes it possible to connect several light sources to each other and enable to build up a service vehicle illumination system with different lengths. By doing this the service vehicle illumination system can be arranged to different places, with different arranging areas, all around the cargo and back space to increase the illumination in the service vehicle as a whole and at certain locations. It also enables an efficient installation procedure.

Advantageously, the light sources being arranged in an electric circuit connected to a switch for controlling operation of the service vehicle illumination system. This further enables a smooth installation procedure in vehicles carrying module system and efficient mounting in module systems of all kinds. It also enables to turn the service vehicle illumination system on and off and save current. It is realised that the switch may be controlled by input signals from sensors of various types, such that e.g. light is provided once a door is opened.

Preferably, the switch for controlling the operation of the service vehicle illumination system being arranged externally of said cargo and back space. The switch may be controlled manually or automatically. By arranging the switch externally from the service vehicle illumination system it is possible to control the light manually from a distance. For example, if the service vehicle illumination system is arranged at the very back of the service vehicle the person who wants to turn it on or off, does not have to go into the dark cargo or back space to be able to do it. The switch could for example be placed at the back door or in the driving compartment. A timer could be connected, to turn off the lamp after a prescribed period of time in order to prevent the battery from draining if the light is left unaware on. However, the switch can also be controlled automatically reacting on an input signal from a sensor.

Another option is that the switch could mechanical or automatically react to the closing or opening of the back door.

Preferably, the service vehicle illumination system being formed of at least one light module unit, having at least one light source and an electric current supplying means adopted for further connection to a second light module unit. This makes it possible to connect several light module units to each other, so that a service vehicle illumination system can be built up in an optional length. In this way the service vehicle illumination system is suitable for all kind of areas and spaces.

Preferably, the light module unit is attached, propagating in a geometric plane, to a module system, said module system comprising at least one module unit containing for example work equipment.

An arrangement like this will help the worker to find his tools, being stored in the module system, faster and easier, because the light will illuminate the right spots. At the same time it makes the working environment more inviting and it also facilitates to work within the service vehicle. Shadows and dark shadowed areas, which otherwise would present limited sight may now be illuminated regardless of.

Preferably, the geometric plane being formed by a shelf and the service vehicle illumination system is arranged on the upper side of the shelf and the light from the light sources is shining through at least one opening of the shelf. The openings can also be used as positioning arrangement, so that the service vehicle illumination system always is placed in the right position. Another aspect is that the openings can be used as fixing zones for the service vehicle illumination system, when it is necessary. Fastening means can for example be fasteners, screws, double-stick tape etc. The service vehicle illumination system could also be hold in place with some kind of protection arrangement, which protects it from for example tools and other articles that are stored on the shelf. The protection arrangement could for example be a mat, which is lying above the service vehicle illumination system.

Furthermore, the geometric plane, being formed by a shelf, and the service vehicle illumination system is arranged to the under side of the shelf. By arranging the service vehicle illumination system to the upper side, and letting the light from the light source shining through at least one opening, or arranging it to the under side of the shelf, the light from the light source will be directed to the area which are going to be illuminated.

Preferably, the service vehicle illumination system being arranged to a geometric plane with at least one fastener.

Advantageously, the fastener being a double-faced tape. Using double-faced tape is an easy way of fixing articles to a surface and it is lenient to the module system, since a minimum of openings is necessary.

However, the fastener may be a clip. Other fasteners such as fastener means, screws etc. can also be used.

Preferably, the service vehicle illumination system is powered by a battery, preferably a car battery.

Preferably, the service vehicle illumination system comprising a rail, made for example of rubber, at least one printed circuit card which is connected to an electric current supplying means, said printed circuit card and electric current supplying means being at least partially embedded in the rail and said printed circuit card comprising at least one light source. The service vehicle illumination system may then be separated by, for example cutting it into smaller or larger pieces so that it can fit into/onto any kind of area.

Advantageously, the light source is a LED lamp. LED lamps are small, last long, are not necessarily consuming a lot of energy and are at the same time robust.

However, it is realized that the light source is not limited to LED lamps. It can be all kind of lamps or illuminating devices.

According to another aspect of the invention a module system for a cargo or a backspace in a service vehicle is provided, comprising at least one module unit containing for example work equipment wherein said service vehicle illumination system, being arranged to a part of the module system and that said module system comprising at least one fastening zone for the service vehicle illumination system.

The fastening zone comprising an opening in the module system to which the service vehicle illumination system can be arranged.

Preferably, the service vehicle illumination system being arranged to a shelf of said module system.

According to another aspect of the invention the service vehicle illumination system may be used in module system of cargo or a backspace of a service vehicle.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. Other objectives, features and advantages of the present invention will appear from the following detailed disclosure, from the attached dependent claims as well as from the drawings.

### Brief Description of the drawings

Currently preferred embodiments of the present invention will now be described in more detail, with reference to the accompanying drawings, wherein:
Fig. 1 discloses an open-up perspective view of a service vehicle comprising a module system, which comprises a service vehicle illumination system according to the invention.
Fig. 2 discloses a perspective bottom view of a module unit, within for example a module system, provided with a first embodiment of the invention.
Fig. 3 discloses a perspective top view of a module unit, within for example a module system, provided with a second embodiment of the invention.
Fig. 4 discloses a cross section of IV-IV in Fig. 3 of the second embodiment of the invention.
Fig. 5 discloses a service vehicle illumination system according to a third embodiment of the invention.
Fig. 6 discloses a service vehicle illumination system according to a fourth embodiment of the invention.

### Detailed Description of Preferred Embodiments

The above, as well as additional objects, features and advantages of the present invention, will be better understood through the following illustrative and non-limiting detailed description of preferred embodiments of the present invention, with reference to the appended drawings, where the same reference to the appended drawings, where the same reference numerals will be used for similar elements, wherein:

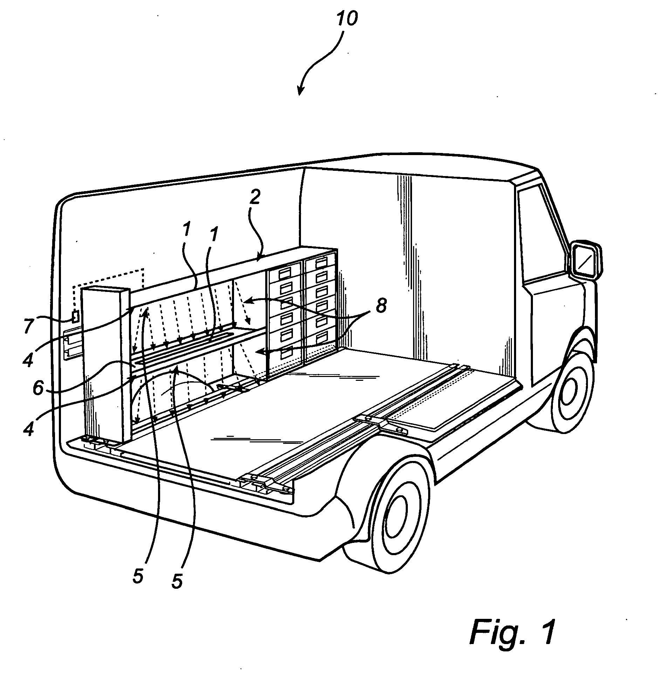

Fig. 1 shows two service vehicle illumination systems 1 arranged to two separate shelves 4 within a module system 2 in a cargo or a back space of a service vehicle 10. However, it should be noticed that the shelf 4 could be any kind of geometric 3D plane. The shelves have two sides, one upper side 6, onto which articles can be placed, and one opposite under side 5. One service vehicle illumination system 1 is arranged to the under side 5 of the shelf 4, and the other one is arranged to the upper side 6 of the shelf 4. The shelf 4, with an arranged service vehicle illumination system 1 on the upper side 6 will have openings (not shown) along the longitudinal direction, through which the light from the service vehicle illumination system 1 will light, because in both cases the light source 9 is placed so that the light 8 from the service vehicle illumination system 1 illuminates at least a part the opposite underneath lying articles and/or shelf 4. This arrangement will certify that at least one part of the module system 2 is sufficiently illuminated. The arrangement will also contribute to a better overall cargo or back space illumination of the service vehicle 10.

The service vehicle illumination system 1 is connected to a switch 7, which controls the operation manually and/or automatically of the service vehicle illumination system 1. The switch 7 is arranged externally from the service vehicle illumination system 1 close to a backdoor of the service vehicle 10, so that it easily can be controlled manually. The electrical circuitry is not shown in detail in the drawing as it may have to be adapted in accordance with different national standards.

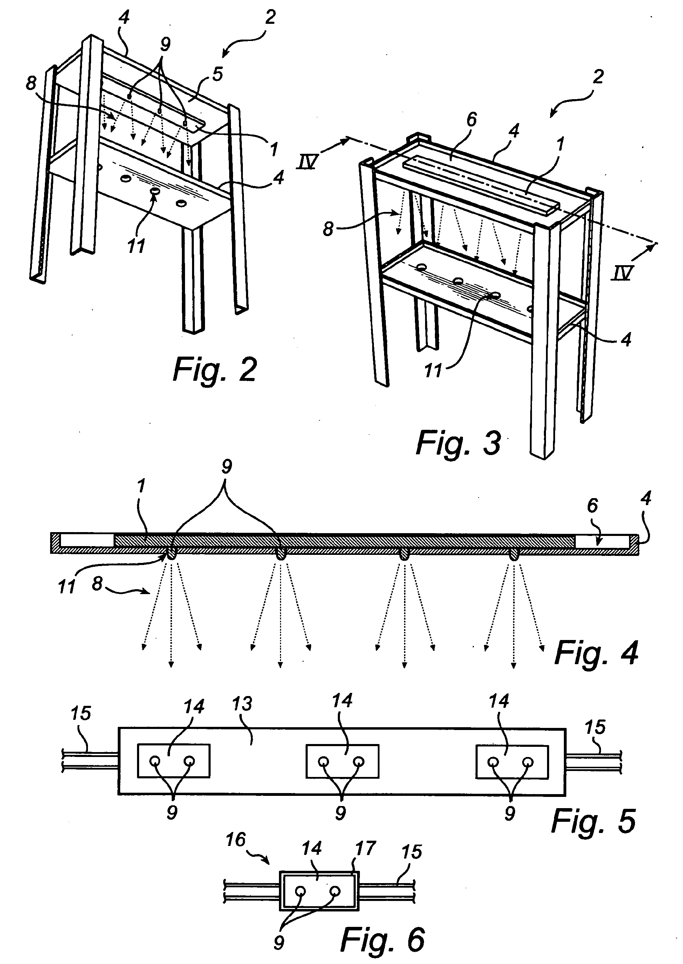

Fig. 2 shows the service vehicle illumination system 1 arranged to the under side 5 of the shelf 4 within a module system 2. The shelf 4 comprises openings 11, which are arranged at a continuous distance in the longitudinal direction of the module system 2. The form of the openings 11 may vary. These openings 11 may be used for positioning of the service vehicle illumination system 1. The service vehicle illumination system 1 is arranged to the under side 5 of the shelf 4 with fastener means, for example fasteners, screws, double-stick tape etc.(not shown). The light source 9 or light sources 9 of the service vehicle illumination system 1 are arranged so that the light 8 from light sources 9 illuminates at least a part of the opposite underneath lying shelf 4 and its articles placed thereon.

Fig. 3 shows the service vehicle illumination system 1 arranged to the upper side 6 of the shelf 4 within a module system 2. The shelves 4 comprises continuous openings 11, which are arranged at a continuous distance in the longitudinal direction of the module system 2. The form of the openings 11 may vary. These openings 11 are illumination openings, through which the light 8 from the light source 9 are shining on at least a part the opposite underneath lying, articles and/or shelf 4.

Fig. 4 shows a cross section the service vehicle illumination system 1, on the upper side 6 of the shelf 4 with its light sources 9 passing through the openings 11 and illuminating the area underneath the shelf 4. However, it is not necessary that the light sources 9 are passing through the openings 11 in accordance with this preferred embodiment. It is enough that the light 8 from the light sources 9 are passing through.

Fig. 5 shows one embodiment of the service vehicle illumination system 1. It comprises some sort of armature, for example a rail 13, which can be made of rubber, at least one printed circuit card 14 onto which at least one light source 9 is arranged and an electric current supplying means 15. The electric current supply mean/means 15 and the printed circuit card/cards 14 may be embedded by the rail 13. The service vehicle illumination system 1 can then be separated through, for example cutting it into smaller or larger pieces so that it can fit into/onto any kind of area. The light sources 9 is preferably of LED-type or any other lamp or illuminating device could possibly provide for an illumination system. They are positioned at a distance to each other so that they correspond to the openings 11 of the shelf 4, especially when the service vehicle illumination system 1 is arranged to the upper side 6 of a shelf 4 and have to shine through the openings 11.

Fig 6 shows another embodiment of the service vehicle illumination system 1. It is a light module unit 16 which can be connected to other light module units 16. A service vehicle illumination system 1 with different length can on this way be organised. The light module unit 16 comprises one printed circuit card 14, onto which at least one light source 9 is arranged, and at least one electric current supplying mean 15 adopted for connection. The printed circuit card 14 can be arranged in some sort of isolating arrangement 17. The electric current supplying means 15 will then protrude out of the isolating arrangement 17. At the end parts of the electric current supplying means 15 connection devices can be arranged, which can connect several light module units 16 to each other. The light source 9 is a LED-lamp. However it can be any other lamp or illuminating device. The distance of the connected light sources 9 should be arranged at a distance to each other so that they correspond with the openings 11 of the shelf 4, especially when the service vehicle illumination system 1 is arranged to the upper side 6 of a shelf 4 and have to light through the openings 11.

The invention has mainly been described above with reference to some embodiments. However, as is readily appreciated by a person skilled in the art, other embodiments than the ones disclosed above are equally possible within the scope of the invention, as defined by the appended patent claims. Furthermore, the features described in association with different embodiments and aspects of the invention may be combined with the claimed scope in order to enable further embodiments.

## Claims

1. Shelf system for a back space in a service vehicle (10), comprising at least two levels, one above the other, at least one storage space beneath the lower of said levels, c h a r a c t e r i s e d in that said shelf system further comprises at least two interconnected light sources (9) connectable to an electrical system of said service vehicle (10), wherein said light sources (9) are arranged at the upper of said levels, wherein said lower level comprises an essentially horizontal shelf having the same number of through openings (11) as the number of light sources (9), wherein each one of said through openings is located in register with a respective one of said light sources (9) so that light (8) from said light sources (9) illuminates said storage space through said through openings (11).

2. Shelf system according to claim 1, further comprising at least one rail (13), made of for example rubber and at least one printed circuit card (14) which is connected to an electric current supply means (15), said printed circuit card (14) and said electrical current supply means (15) being at least partly embedded in said rail (13).

## Patentansprüche

1. Ablagesystem für einen Laderaum in einem Kundendienstfahrzeug (10), mindestens zwei Ebenen übereinander und mindestens einen Lagerraum unter der unteren der beiden Ebenen umfassend, **dadurch gekennzeichnet, dass** das Ablagesystem ferner mindestens zwei miteinander verbundene Lichtquellen (9) umfasst, die an ein elektrisches System des Kundendienstfahrzeugs (10) angeschlossen werden können, wobei die Lichtquellen (9) an der oberen der beiden Ebenen angeordnet sind, wobei die untere Ebene eine im Wesentlichen horizontale Ablage umfasst, die eine der Anzahl von Lichtquellen (9) entsprechende Anzahl von Durchgangsöffnungen (11) aufweist, wobei jede der Durchgangsöffnungen in Flucht mit einer entsprechenden der Lichtquellen (9) angeordnet ist, so dass Licht (8) von den Lichtquellen (9) durch die Durchgangsöffnungen (11) den Lagerraum beleuchtet.

2. Ablagesystem nach Anspruch 1, ferner mindestens eine Schiene (13) umfassend, die zum Beispiel aus Kautschuk hergestellt ist, und mindestens eine Leiterplatte (14), die an ein Mittel zur Zufuhr von Elektroenergie (15) angeschlossen ist, wobei die Leiterplatte (14) und das Mittel zur Zufuhr von Elektroenergie (15) mindestens teilweise in die Schiene (13) eingelassen sind.

## Revendications

1. Système d'étagères pour un coffre arrière dans un véhicule de service (10), comprenant au moins deux niveaux, un par-dessus l'autre, au moins un espace de stockage au-dessous du niveau inférieur desdits niveaux, **caractérisé en ce que** ledit système d'étagères comprend en outre au moins deux sources lumineuses (9) interconnectées pouvant être connectées à un système électrique dudit véhicule de service (10), dans lequel lesdites sources lumineuses (9) sont agencées au niveau supérieur desdits niveaux, dans lequel ledit niveau inférieur comprend une étagère essentiellement horizontale ayant le même nombre d'ouvertures traversantes (11) que le nombre de sources lumineuses (9) dans lequel chacun desdites ouvertures traversantes est située en vis-à-vis d'une source lumineuse respective desdites sources lumineuses (9) de sorte que la lumière (8) provenant desdites sources lumineuses (9) illumine ledit espace de stockage à travers lesdites ouvertures traversantes (11).

2. Système d'étagères selon la revendication 1, comprenant en outre au moins un rail (13), constitué par exemple de caoutchouc et au moins une carte de circuit imprimé (14) qui est connectée à un moyen d'alimentation en courant électrique (15), ladite carte de circuit imprimé (14) et ledit moyen d'alimentation en courant électrique (15) étant au moins partiellement incorporés dans ledit rail (13).
